# EUROPEAN PATENT APPLICATION

(11) **EP 4 834 628 A1**
(43) Date of publication of application: **04.11.2026**
(21) Application number: 24911901.7
(22) Date of filing: 02.10.2024
(51) Int. Cl.: B60K 15/04, B60K 8/00, B62D 49/00, H01M 8/04

(54) **WORK VEHICLE**

(30) Priority: 26.12.2023 JP 2023219057
(71) Applicant: KUBOTA CORPORATION, Osaka-shi, Osaka 530-0011 (JP)
(72) Inventor: TAKAKI, Takahiro, Sakai-shi, Osaka 590-0908 (JP)
(74) Representative: Cabinet Beau de Loménie
(86) International application number: PCT/JP2024/035197
(87) International publication number: WO 2025/142007

(57) **Abstract**

A work vehicle includes: a vehicle body; a fuel cell installed on the vehicle body; a tank that stores fuel to be supplied to the fuel cell; and a first filling port and a second filling port for filling the tank with fuel.

## Description

### TECHNICAL FIELD

The present disclosure relates to a work vehicle driven by a fuel cell. The present application claims priority based on Japanese Patent Application No. 2023-219057 filed on December 26, 2023, the entire contents of which are incorporated herein by reference.

### BACKGROUND ART

There has been proposed a work vehicle such as a tractor that uses a fuel cell that generates power by hydrogen gas instead of an internal combustion engine using fossil fuel from the viewpoint of protecting the global environment, and operates a traveling device and a working device by an electric motor driven by the generated electric power (see Patent Literature 1). The work vehicle includes a tank that stores hydrogen gas.

In addition, Patent Literature 2 discloses a gas filling system including a vehicle equipped with a fuel cell and a tank, and a gas station. The gas station includes a filling nozzle connected to a hydrogen gas supply source, the vehicle includes a filling port (receptacle) to which the filling nozzle is connected, and the filling port is connected to the tank via a pipe. The tank of the vehicle is filled with hydrogen gas from the hydrogen gas supply source via the filling nozzle, the filling port, and the pipe.

### CITATION LIST

### [PATENT LITERATURE]

PATENT LITERATURE 1: Japanese Laid-Open Patent Publication No. 2023-13186
PATENT LITERATURE 2: Japanese Laid-Open Patent Publication No. 2011-33068

### SUMMARY OF THE INVENTION

A work vehicle of the present disclosure includes: a vehicle body; a fuel cell installed on the vehicle body; a tank that stores fuel to be supplied to the fuel cell; and a first filling port and a second filling port for filling the tank with fuel.

### BRIEF DESCRIPTION OF DRAWINGS

[FIG. 1] FIG. 1 is a perspective view of a work vehicle.
[FIG. 2] FIG. 2 is a front view of the work vehicle.
[FIG. 3] FIG. 3 is a rear view of the work vehicle.
[FIG. 4] FIG. 4 is a right side surface view of the work vehicle.
[FIG. 5] FIG. 5 is a left side surface view of the work vehicle.
[FIG. 6] FIG. 6 is a plan view of the work vehicle.
[FIG. 7] FIG. 7 is a perspective view illustrating an example of an internal structure of the work vehicle.
[FIG. 8] FIG. 8 is a perspective view illustrating a periphery of a filling port of the work vehicle.
[FIG. 9] FIG. 9 is a block view illustrating an example of a functional configuration of the work vehicle.
[FIG. 10] FIG. 10 is a schematic cross-sectional view illustrating an installation example of a filling port.
[FIG. 11A] FIG. 11A is a schematic view illustrating a modification of a connection form between a tank and a filling port.
[FIG. 11B] FIG. 11B is a schematic view illustrating another modification of a connection form between a tank and a filling port.
[FIG. 11C] FIG. 11C is a schematic view illustrating another modification of a connection form between a tank and a filling port.

### DETAILED DESCRIPTION

### <Problem to be Solved by the Disclosure>

There is a very large work vehicle such as a tractor having a total height of, for example, 3 m. Therefore, when a tank is filled with hydrogen gas from a filling port, it may be difficult to handle the work vehicle in order to bring the filling port close to the filling nozzle of the gas station, or the filling operation of the hydrogen gas may be complicated.

An object of the present disclosure is to provide a work vehicle capable of easily performing a fuel filling operation.

### <Advantageous Effects of the Disclosure>

According to the present disclosure, it is possible to provide a work vehicle capable of easily performing a fuel filling operation.

### <Outline of Embodiments of Present Disclosure>

Hereinafter, an outline of embodiments of the present disclosure will be listed and described.
(1) A work vehicle according to the present embodiment includes: a vehicle body; a fuel cell installed on the vehicle body; a tank that stores fuel to be supplied to the fuel cell; and a first filling port and a second filling port for filling the tank with fuel.
   According to the above configuration, since the work vehicle includes the first and second filling ports, it is possible to selectively use any one of the filling ports close to the filling nozzle of a fuel supply machine or use both of the filling ports according to the installation situation of the fuel supply machine such as the gas station or the structure of the work vehicle, and it is possible to perform a fuel filling operation according to the situation. Therefore, the convenience of the fuel filling operation can be improved, and the filling operation can be easily performed. Note that the present disclosure does not prevent the work vehicle from including filling ports other than the first filling port and the second filling port. Therefore, the work vehicle may include three or more filling ports.
(2) In the work vehicle according to (1), the first filling port is disposed on one side surface of the vehicle body in a left-right direction, and the second filling port is disposed on another side surface of the vehicle body in a left-right direction.
   According to this configuration, when the filling port is brought close to the filling nozzle of the fuel supply machine, movement of the work vehicle such as a direction change can be reduced.
(3) In the work vehicle according to (1), the first filling port is disposed on one side surface of the vehicle body in a front-rear direction, and the second filling port is disposed on another side surface of the vehicle body in a front-rear direction.
   According to this configuration, when the filling port is brought close to the filling nozzle of the fuel supply machine, movement of the work vehicle such as a direction change can be reduced.
(4) In the work vehicle according to (1), the first filling port is disposed on one side surface of the vehicle body in a left-right direction, and the second filling port is disposed on one side surface of the vehicle body in a front-rear direction.
   According to this configuration, when the filling port is brought close to the filling nozzle of the fuel supply machine, movement of the work vehicle such as a direction change can be reduced.
(5) In the work vehicle according to (1), the first filling port and the second filling port are disposed on a common surface of the vehicle body.
   According to this configuration, when the filling port is brought close to the filling nozzle of the fuel supply machine, movement of the work vehicle such as the forward and backward movement can be reduced. In addition, it is possible to easily perform an operation of simultaneously filling both the filling ports with fuel.
(6) In the work vehicle according to any one of (1) to (5), the vehicle body includes a cover that covers an installed device, and at least one of the first filling port and the second filling port is disposed inside or outside the cover.
(7) In the work vehicle according to any one of (1) to (6), the tank includes a first tank and a second tank, and the work vehicle includes a pipe that connects both the first filling port and the second filling port to the first tank and the second tank.
   According to this configuration, the first and second tanks can be filled with fuel from either of the first and second filling ports. Note that the present disclosure does not prevent the work vehicle from including tanks other than the first tank and the second tank. Therefore, the work vehicle may include three or more tanks.
(8) In the work vehicle according to (7), the pipe includes a first branch portion having one end connected to the first filling port, a second branch portion having one end connected to the second filling port, and a merging portion that merges the other ends of the first branch portion and the second branch portion, and the first branch portion and the second branch portion are provided with a check valve that allows a flow of fuel in a direction toward the merging portion and blocks a flow of fuel in a reverse direction.
   According to this configuration, the fuel supplied from one filling port can be suppressed from flowing to the other filling port.
(9) In the work vehicle according to any one of (1) to (6), the tank includes the first tank and the second tank, and the work vehicle includes a first pipe that connects the first filling port to the first tank, and a second pipe that connects the second filling port to the second tank.

According to this configuration, the first and second tanks can be individually filled with fuel from the first and second filling ports. In addition, it is possible to fill the fuel in a short time by simultaneously filling the fuel from both filling ports.

### < Details of Embodiments of Present Disclosure >

Hereinafter, embodiments of the present disclosure will be described in detail with reference to the drawings.

### [Entire Configuration of Work Vehicle]

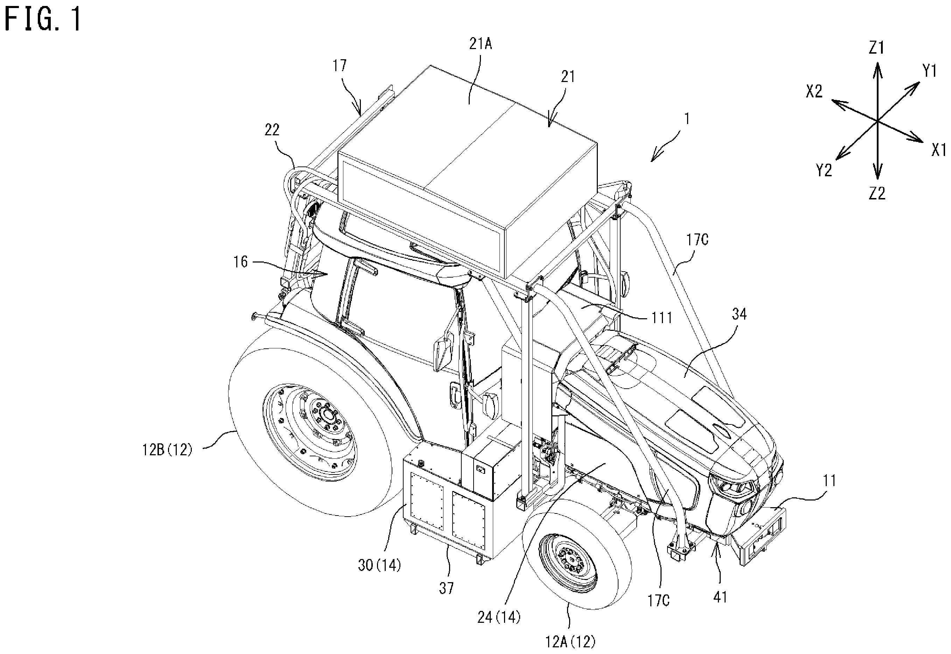

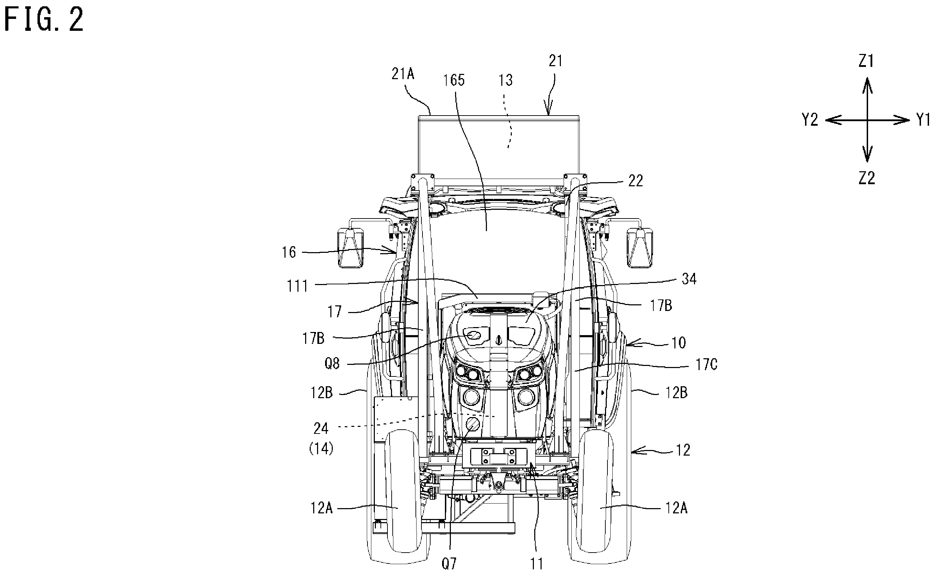

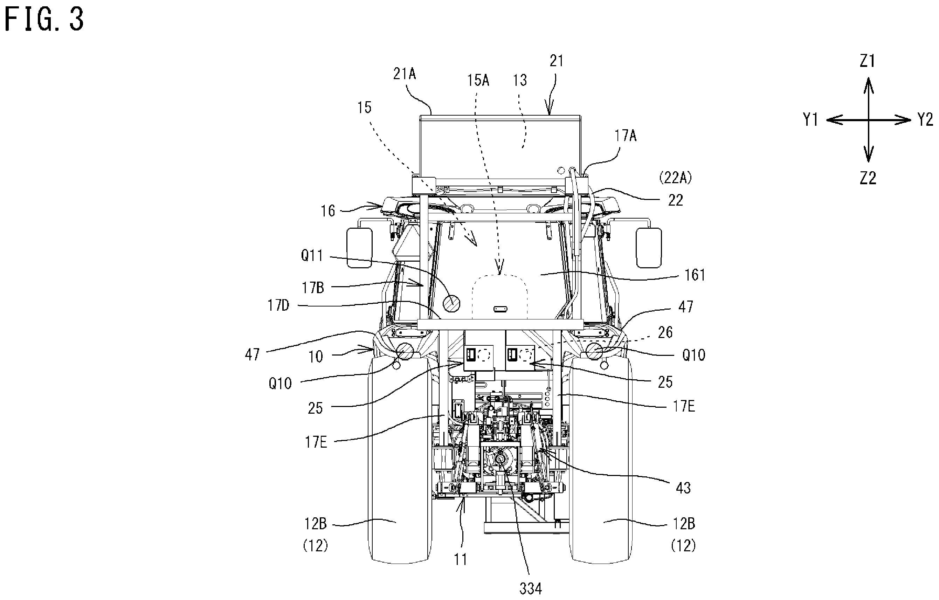

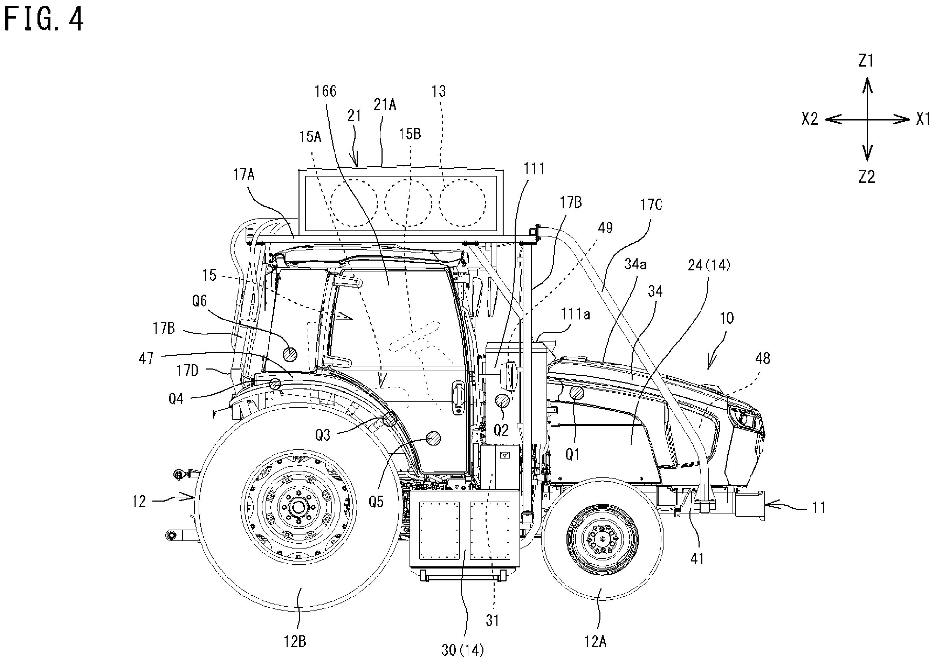

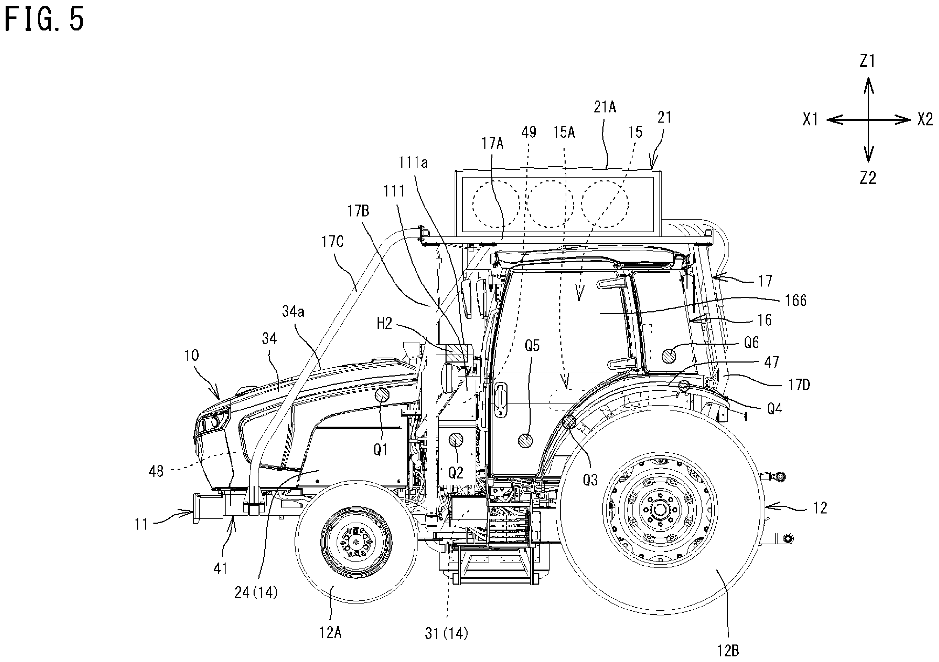

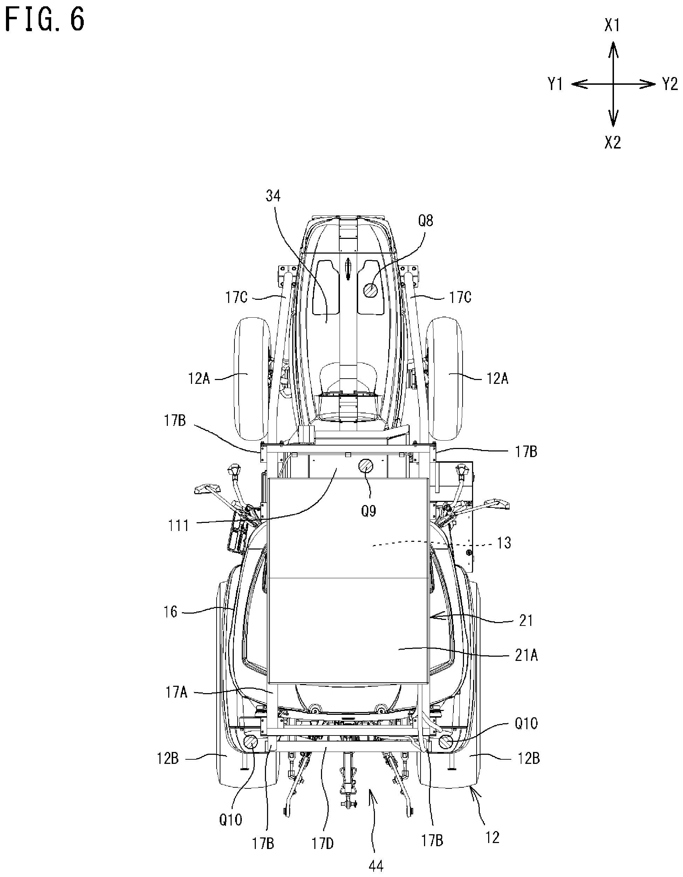

FIG. 1 is a perspective view of a work vehicle. FIG. 2 is a front view of the work vehicle. FIG. 3 is a rear view of the work vehicle. FIG. 4 is a right side surface view of the work vehicle. FIG. 5 is a left side surface view of the work vehicle. FIG. 6 is a plane view of the work vehicle. Note that, in the present specification, a direction in which a work vehicle 1 moves forward is defined as front, a direction in which the work vehicle 1 moves backward is defined as rear, a left side of the work vehicle 1 facing forward is defined as left, and a right side of the work vehicle 1 facing forward is defined as right. In FIG. 2 to FIG. 7, front, rear, left, right, upper, and lower directions are indicated by arrows X1, X2, Y1, Y2, Z1, and Z2, respectively.

As illustrated in FIG. 1 to FIG. 6, the work vehicle 1 is a vehicle used for farmwork, specifically, a tractor. However, the work vehicle 1 is not limited to the tractor, and may be a moving body such as a farm machine, a construction machine, or a utility vehicle.

The work vehicle 1 includes a vehicle body 11, a traveling device 12 that supports the vehicle body 11, a driver's seat 15, a cabin 16, and the like. The vehicle body 11 includes a chassis 41, a hood 34, a cover 111, the cabin 16, a fender 47 for a rear wheel 12B, and the like. The hood 34 and the cover 111 are installed on the chassis 41 of the vehicle body 11 in order from a front portion to a rear portion, and the cabin 16 is disposed behind the cover 111. The hood 34, the cover 111, and the cabin 16 all function as covers for covering devices (fuel cell 24, radiators 48 and 49, a seat 15A, and the like to be described later) installed on the vehicle body 11.

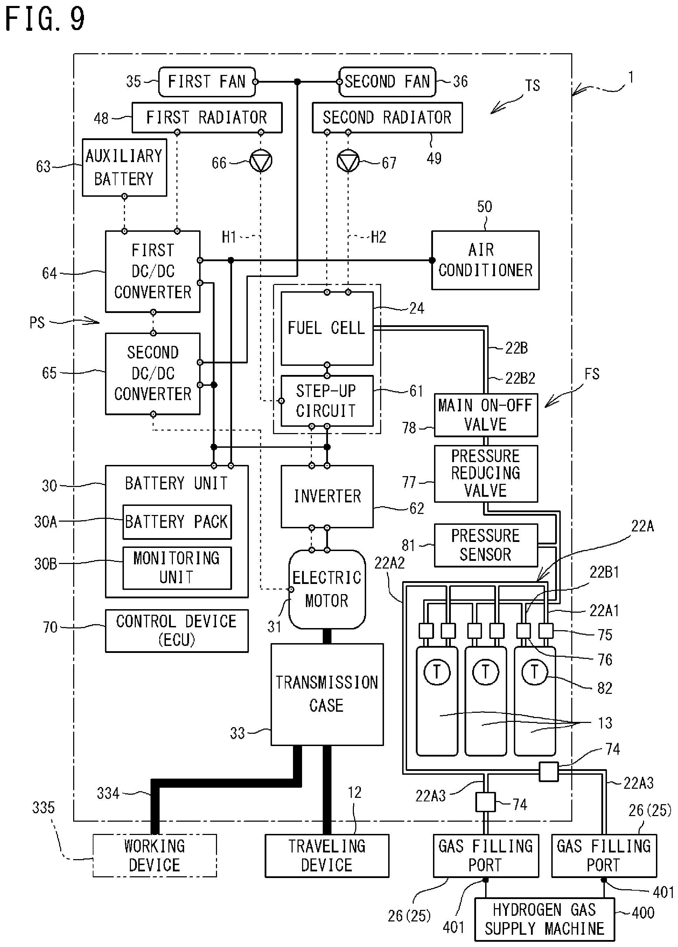

The work vehicle 1 further includes a tank unit 21 having a plurality of tanks 13 (see FIG. 4) for storing fuel, and a drive device 14 driven by the stored fuel. The tank unit 21 includes a rectangular parallelepiped case 21A having a length (height) in the vertical direction smaller than a length in the front-rear and left-right directions, and the plurality of tanks 13 is housed side by side in the case 21A. The tank unit 21 includes various valves 74 to 78 (see FIG. 9). The tank unit 21 is disposed above the driver's seat 15 and the cabin 16 by an installation frame 17.

The fuel is liquid or gas, and is hydrogen, methane, carbon monoxide (CO), or the like. In this embodiment, the tank 13 stores hydrogen gas. Therefore, the work vehicle 1 is a fuel cell vehicle (FCV), and travels using electric power generated by a chemical reaction between hydrogen and oxygen by the fuel cell 24 as an energy source. The fuel cell 24 generates electric power by hydrogen. The fuel cell 24 may generate electric power with methane or carbon monoxide (CO).

The drive device 14 includes the fuel cell 24, a battery unit 30, and an electric motor 31 (see FIG. 3: hereinafter, also referred to as "motor 31"). The battery unit 30 incorporates at least one battery pack 30A (see FIG. 9) that stores the output electric power of the fuel cell 24.

As illustrated in FIG. 3, the work vehicle 1 includes a pipe 22 and a filling unit 25. In this embodiment, the pipe 22 allows hydrogen gas to pass therethrough. Note that the pipe 22 may be a pipe that allows methane or carbon monoxide (CO) to pass therethrough. The filling unit 25 has a filling port (receptacle; hereinafter, also simply referred to as a "filling port") 26 to which a filling nozzle 401 is connected. The filling port 26 is filled with hydrogen gas from the filling nozzle 401. Note that the filling port 26 may be filled with methane or carbon monoxide (CO) from the filling nozzle 401. In this embodiment, in the filling unit 25, the filling port (gas filling port) 26 is filled with hydrogen gas from a hydrogen gas supply machine (fuel supply machine) 400 (see FIG. 9) such as a gas station different from the work vehicle 1. The hydrogen gas is supplied to the tank 13 through the pipe 22 (22A). The hydrogen gas in the tank 13 is supplied to the fuel cell 24 through the pipe 22 (22B). Specific configurations of the filling unit 25 and the pipe 22 will be described later.

The cabin 16 is a partitioned driver's cabin having a front pillar, a rear pillar, and a roof, and surrounds the driver's seat 15. The driver's seat 15 includes the seat 15A and an operation device 15B. The operation device 15B includes a steering wheel, a lever, a meter, and the like. The front pillars of the cabin 16 are disposed on the left and right sides on the front side of the driver's seat 15, and the rear pillars are disposed on the left and right sides on the rear side of the driver's seat 15. The cabin 16 includes a front panel 165 (see FIG. 2) between the left and right front pillars, a back panel 161 (see FIG. 3) between the left and right rear pillars, and side panels 166 between the front pillars and the rear pillars. The side panel 166 includes an openable and closable door. The front panel 165, the back panel 161, and the side panel 166 are formed of a transparent material such as glass or a synthetic resin material, and can be visually recognized from the inside to the outside and from the outside to the inside of the cabin 16. The work vehicle 1 may have a canopy or a rollover protective structure (ROPS) instead of the cabin 16.

The traveling device 12 includes front wheels 12A and rear wheels 12B. These front wheels and rear wheels are arranged symmetrically with respect to the vehicle body 11. One or both of the front wheel 12A and the rear wheel 12B are rotated by the power of the motor 31. One or both (drive wheels) of the wheels 12A and 12B rotated by the power of the motor 31 may be crawlers (caterpillar). An upper portion and a front portion of the rear wheel 12B are covered with the fender 47.

As illustrated in FIG. 4 and FIG. 5, a first radiator 48, the fuel cell 24, and a second radiator 49 are installed on a portion of the chassis 41 corresponding to the front wheel 12A in order from the front side to the rear side. The first radiator 48 and the fuel cell 24 are covered with the hood (cover) 34, and the second radiator 49 is covered with the cover 111.

As illustrated in FIG. 4, an upper surface 111a of the cover 111 is higher than the uppermost end of the hood 34, but lower than the uppermost end of a steering wheel 15B of the driver's seat 15. In addition, a rear end portion of the hood 34 is located lower than the cover 111, and an upper surface 34a of the hood 34 is tapered from the rear end portion toward a front end portion. Therefore, the front view from the operator sitting on the driver's seat 15 is hardly obstructed.

### [Internal Structure of Work Vehicle]

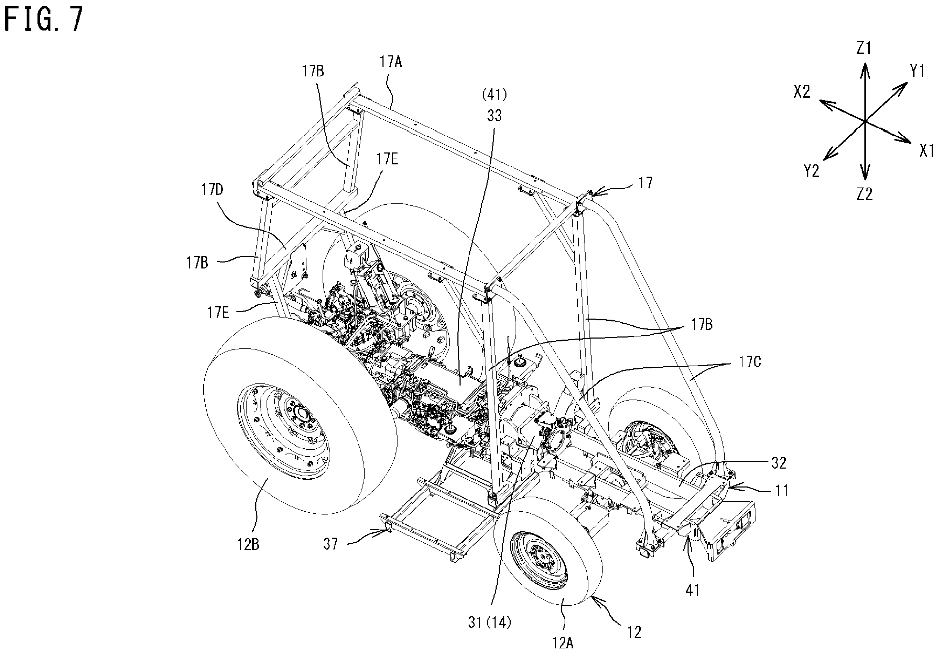

FIG. 7 is a perspective view illustrating an example of an internal structure of the work vehicle.

As illustrated in FIG. 7, the chassis 41 constituting the vehicle body 11 is formed of a steel frame having a shape elongated in the front-rear direction, and includes a front frame 32 and a transmission case 33.

The transmission case 33 is connected to a rear portion of the front frame 32, and a framework of the vehicle body 11 is formed by the transmission case 33 and the front frame 32.

The installation frame 17 for disposing the tank unit 21 above the cabin 16 is connected to the chassis 41. The installation frame 17 includes a ceiling frame 17A having a substantially rectangular shape in which the front-rear direction is longer than the left-right direction, a plurality of pillars 17B supporting the ceiling frame 17A from below, and a pair of left and right reinforcing frames 17C connected to the front end portion of the ceiling frame 17A. In addition, the installation frame 17 includes a base frame 17D to which the lower ends of the left and right pillars 17B on the rear side are connected, and a pair of left and right lower portion frames 17E extending downward from the base frame. The base frame 17D is disposed substantially horizontally and extends in the left-right direction.

The tank unit 21 is mounted on and connected to the ceiling frame 17A. As illustrated in FIG. 2, the ceiling frame 17A is located higher than the roof of the cabin 16. Therefore, the tank unit 21 is disposed above the roof of the cabin 16.

As illustrated in FIG. 7, the reinforcing frame 17C is a reinforcing diagonal member that is inclined downward from the front end portion of the ceiling frame 17A to the front frame 32. Therefore, the rigidity of the installation frame 17 in the front-rear direction is enhanced as compared with the case where the ceiling frame 17A and the tank unit 21 are supported only by the pillars 17B.

A support frame 37 for causing the vehicle body 11 to support the battery unit 30 is connected to the chassis 41 of the work vehicle 1.

Specifically, the motor 31 is installed on the front frame 32 of the chassis 41, and the support frame 37 is attached to a portion of the front frame 32 corresponding to the motor 31. The support frame 37 is made of, for example, a metal frame member, and is attached in a cantilevered state so as to protrude rightward from the front frame 32.

The transmission case 33 located behind the motor 31 has a power transmission mechanism therein. The power transmission mechanism includes a transmission, a clutch, and a differential gear, and decelerates or accelerates a rotation of the output shaft of the motor 31 to transmit the rotation to the traveling device 12.

The power transmission mechanism inside the transmission case 33 includes a branch mechanism that outputs a portion of the power of the motor 31 to a PTO shaft 334 (see FIG. 9). The PTO shaft 334 is an output shaft protruding rearward from the transmission case 33.

A coupling device 44 (see FIG. 6) configured by, for example, a three-point linkage mechanism for coupling a working device 335 (see FIG. 9: also referred to as "implement") for performing desired farmwork to the rear of the vehicle body 11 is attached to the transmission case 33. The working device 335 is, for example, a cultivator, a baler, or the like.

The rotational movement of the PTO shaft 334 is transmitted to the input shaft of the working device 335 coupled to the coupling device 44, for example, during driving of the traveling device 12. Therefore, the work vehicle 1 can drive the working device 335 by the power of the motor 31 while traveling in a field or the like.

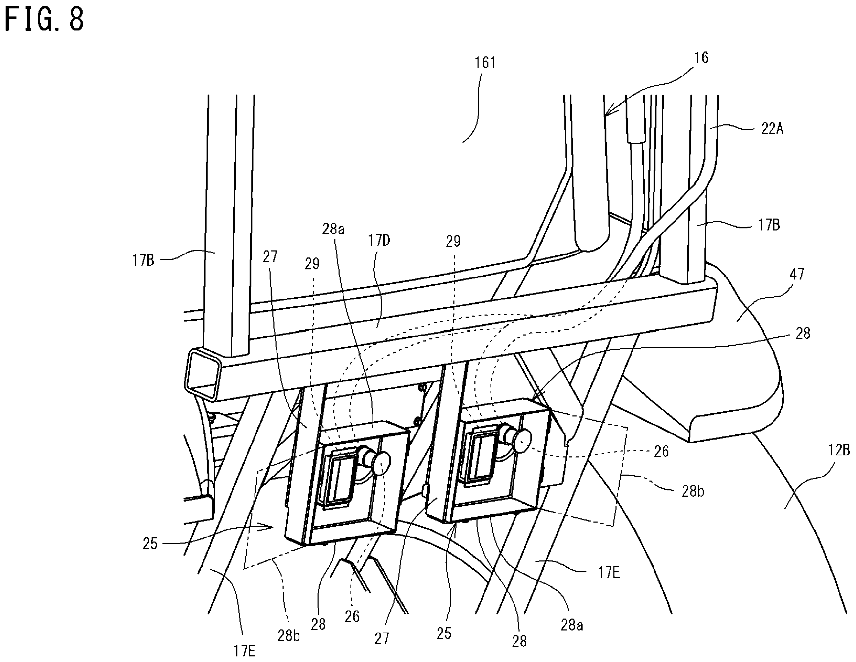

FIG. 8 is a perspective view illustrating a periphery of a filling port of the work vehicle.

The work vehicle 1 of the present embodiment includes two filling units 25. The two filling units 25 are disposed on the rear surface of the work vehicle 1 (vehicle body 11). Each of the filling units 25 includes the filling port 26 and a housing 28 that houses the filling port 26. The filling port 26 faces rearward, and the filling nozzle 401 of the hydrogen gas supply machine 400 is inserted from the rear. The housing 28 includes a case 28a and a lid 28b. The case 28a has walls at the top, bottom, left, right, and front, and opens to the rear. The lid 28b is openable and closable, and can close an opening of the case 28a. The pipe 22A is connected to the filling unit 25 (filling port 26) from the front of the housing 28.

With this configuration, the filling port 26 is protected by the housing 28. The pipe 22A is connected to the filling unit 25 from a space formed between the housing 28 and the rear portion of the vehicle body 11. A connection portion 29 between the pipe 22A and the housing 28 is not exposed to wide space behind the vehicle, and the connection portion 29 is protected.

The two filling units 25 are located behind the cabin 16 and between the rear wheels 12B on both sides in the left-right direction. The two filling units 25 are protected from the left-right directions by the rear wheels 12B and are protected from the front by the cabin 16.

The two filling units 25 are disposed under the base frame 17D of the installation frame 17. Both of the two filling units 25 are supported by the base frame 17D via a bracket 27. The filling units 25 are protected from above by the base frame 17D. The two filling units 25 are disposed between the left and right lower portion frames 17E.

One filling unit 25 and the other filling unit 25 are arranged side by side on the left and right. One filling unit 25 is disposed on the left side of the center of the work vehicle in the left-right direction, and the other filling unit 25 is disposed on the right side of the center of the work vehicle in the left-right direction. Therefore, in a case where the filling nozzle 401 of the hydrogen gas supply machine 400 is on the left side of the work vehicle 1, the hydrogen gas is easily filled using the filling unit 25 on the left side, and in a case where the filling nozzle 401 of the hydrogen gas supply machine 400 is on the right side of the work vehicle 1, the hydrogen gas is easily filled using the filling unit 25 on the right side.

The two filling units 25 are disposed at the same height. However, the two filling units 25 may be disposed at different heights. The two filling units 25 may be arranged side by side in the vertical direction. Since the heights of the two filling units 25 are different, it is possible to select the filling unit 25 that is easy for the worker to work according to his/her height, posture, and the like to fill the hydrogen gas.

### [Functional Configuration of Work Vehicle]

FIG. 9 is a block view illustrating an example of a functional configuration of the work vehicle.

As illustrated in FIG. 9, the functional system of the work vehicle 1 includes a fuel system FS, a power system PS, and a temperature conditioning system TS.

The components of the fuel system FS include at least one tank (hydrogen tank) 13, valves 74 to 78, sensors 81 and 82, and the like. Components of the temperature conditioning system TS include a plurality of radiators 48 and 49, an air conditioner 50, and the like. Components of the power system PS include the fuel cell 24, a step-up circuit 61, an inverter 62, the motor 31, the transmission case 33, DC/DC converters 64 and 65, the battery unit 30, and the like.

The work vehicle 1 of the present embodiment includes a plurality of tanks 13, for example, three tanks 13. Each of the tanks 13 is connected to the pipes 22A and 22B. The pipe 22A is a gas pipe connecting the filling port 26 and each tank 13. Hydrogen gas is introduced into the filling port 26 from the hydrogen gas supply machine 400 such as a gas station. The pipe 22A guides the hydrogen gas introduced into the filling port 26 to each tank 13.

The pipe 22A includes a plurality of downstream branch portions 22A1, a merging portion 22A2, and a plurality of upstream branch portions 22A3. The upstream branch portions 22A3, which are equal in number (two in the illustrated example) to the filling ports 26, are provided. The filling ports 26 are connected to ends (upstream ends) of the upstream branch portions 22A3, respectively. One end (upstream end) of the merging portion 22A2 is connected to the other end (downstream end) of each of the two upstream branch portions 22A3.

The other end (downstream end) of the merging portion 22A2 is connected to one end (upstream end) of each of the plurality of downstream branch portions 22A1. The downstream branch portions 22A1, which are equal in number (three in the illustrated example) to the tanks 13, are provided. The other ends (downstream ends) of downstream branch portions 22A1 are connected to the tanks 13, respectively. Therefore, the hydrogen gas introduced from the filling ports 26 flows through the respective upstream branch portions 22A3, is then merged at the merging portion 22A2, is then branched at the respective downstream branch portions 22A1, and is then filled in the respective tanks 13.

The upstream branch portion 22A3 is provided with a check valve 74. The check valve 74 allows the flow of hydrogen gas from the filling port 26 toward the merging portion 22A2 and blocks the flow of hydrogen gas in the opposite direction. Therefore, the hydrogen gas introduced from one filling port 26 is suppressed from flowing into the other filling port 26.

The downstream branch portion 22A1 is also provided with a check valve 75. The check valve 75 allows the flow of hydrogen gas from the merging portion 22A2 toward the tank 13 and blocks the flow of hydrogen gas in the opposite direction. Therefore, the hydrogen gas in the tank 13 can be suppressed from flowing back to the downstream branch portion 22A1.

As described above, the work vehicle 1 of the present embodiment can fill all the tanks 13 with the hydrogen gas regardless of which of the two filling ports 26 the hydrogen gas is supplied from. In addition, even in a case where hydrogen gas is simultaneously supplied from both the filling ports 26, all the tanks 13 can be filled with the hydrogen gas.

The pipe 22B is a gas pipe connecting the fuel cell 24 and the tank 13. The pipe 22B guides the hydrogen gas stored in each tank 13 to the fuel cell 24. The pipe 22B has a branch portion 22B1 and a merging portion 22B2. The branch portions 22B1, which are equal in number (three in the illustrated example) to the tanks 13, are provided. One end (upstream end) of the branch portion 22B1 is connected to the tank 13, and the other end (downstream end) is connected to the merging portion 22B2. Therefore, the hydrogen gas released from each of the tanks 13 flows through the branch portions 22B1, is merged at the merging portion 22B2, and is then guided to the fuel cell 24.

An on-off valve 76 is provided in each branch portion 22B1 of the pipe 22B. Each on-off valve 76 switches between release of the hydrogen gas in each tank 13 and stop (blocking) of the release. A pressure reducing valve 77 and a main on-off valve 78 are provided at the merging portion 22B2 of the pipe 22B. The pressure reducing valve 77 reduces the pressure of the hydrogen gas released from the tank 13. The pressure of the hydrogen gas in the tank 13 is, for example, 35 megapascals or more, whereas the pressure of the hydrogen gas after being decompressed by the pressure reducing valve 77 is, for example, approximately 2 atmospheres. The main on-off valve 78 switches between supply of the hydrogen gas decompressed by the pressure reducing valve 77 to the fuel cell 24 and stop (blocking) of the supply. The on-off valves 76 and 78 are configured by an electromagnetic valve actuated by a solenoid, an electric valve actuated by a motor, or the like.

A pressure sensor 81 is provided between the plurality of on-off valves 76 and the pressure reducing valve 77. The pressure sensor 81 is provided in the merging portion 22B2 of the pipe 22B. The pressure sensor 81 detects the pressure of the hydrogen gas released from the plurality of tanks 13. The pressure detected by the pressure sensor 81 corresponds to the pressure of the hydrogen gas in the tanks 13 releasing the hydrogen gas through the on-off valve 76. In addition, each tank 13 is provided with a temperature sensor 82. The temperature sensor 82 detects the temperature of the hydrogen gas in the tank 13.

The hydrogen gas released from the tank 13 and flowing through the pipe 22B is supplied to the fuel cell 24. The fuel cell 24 is, for example, a battery module configured by arranging a plurality of single cells having a positive electrode and a negative electrode in a stacked state. The fuel cell 24 collects electric power generated by each single cell and generates electric power necessary for driving the electric motor 31.

The fuel cell 24 is connected to the second radiator 49 through a cooling flow path H2. An electrode of the fuel cell 24 is adjusted to a predetermined temperature by a coolant circularly supplied from the second radiator 49. As a result, the fuel cell 24 can maintain high power generation efficiency.

The fuel cell 24 is electrically connected to an input side of the step-up circuit 61, and an output side of the step-up circuit 61 is electrically connected to a direct current side of the inverter 62. The step-up circuit 61 increases a voltage input from the fuel cell 24, and outputs the increased voltage to the inverter 62 and the battery unit 30.

The inverter 62 is electrically connected to the motor 31. The inverter 62 converts a direct current input from the step-up circuit 61 into a three-phase alternating current and outputs the three-phase alternating current to the motor 31. Therefore, the electric power generated by the fuel cell 24 is stepped up and converted into an alternating current, and transmitted to the motor 31.

The motor 31 includes a rotor and a stator having a plurality of coils, and drives an output shaft with predetermined torque at predetermined rotational speed. For example, only one motor 31 is installed on the work vehicle 1, and an output shaft of the motor 31 is coupled to the transmission case 33. A plurality of motors 31 may be installed. For example, in a case where two types of motors 31 for the front wheel 12A and the rear wheel 12B are provided, the power of each motor 31 has only to be output to each of the front wheel 12A and the rear wheel 12B.

The power transmission mechanism of the transmission case 33 outputs all or a portion of the power of the motor 31 to the traveling device 12. In addition, when operating the working device 335, the power transmission mechanism also outputs the power of the motor 31 to the PTO shaft 334.

The battery unit 30 is an electrical storage device that absorbs load variation of the fuel cell 24. Specifically, the battery unit 30 temporarily charges the electric power supplied from the step-up circuit 61, discharges the electric power at the time of high load, and supplies the driving electric power to the motor 31 to the inverter 62.

The battery unit 30 includes the battery pack 30A and a monitoring unit 30B. The battery pack 30A includes at least one cell. The cell is a charge-discharge type such as a lithium ion battery cell. The output voltage of the battery unit 30 is, for example, 24 V.

The monitoring unit 30B includes a processor that performs switching control of the operation (charging or discharging) of the battery pack 30A and measurement of the state of charge (for example, SOC).

The work vehicle 1 includes a plurality of electrical components that operates at a voltage lower than that of the motor 31. Direct current power stepped down by a step-down circuit is supplied to these electrical components.

The plurality of electrical components includes, for example, an auxiliary battery 63, radiators 48 and 49, and the air conditioner 50. The step-down circuit corresponds to, for example, a plurality of DC/DC converters 64 and 65 (hereinafter, also referred to as "first converter 64" and "second converter 65") having different output voltages.

The first converter 64 steps down the direct current voltage input from the step-up circuit 61 to a first voltage (for example, 12 volts) and supplies the first voltage to the auxiliary battery 63, the air conditioner 50, and the like.

The second converter 65 steps down the direct current voltage input from the step-up circuit 61 to a second voltage (for example, 24 volts) and supplies the second voltage to the radiators 48 and 49. The inverter 62 and both converters 64 and 65 are disposed in a portion of the chassis 41 corresponding to the driver's seat 15. Note that, the second voltage of the second converter 65 may be supplied to the battery unit 30.

As described above, the first radiator 48 is disposed in front of the fuel cell 24, and the second radiator 49 is disposed behind the fuel cell 24 (see FIG. 2).

These radiators 48 and 49 constitute a cooling system that cools an electrical component such as the fuel cell 24, the step-up circuit 61, the inverter 62, the motor 31, and the first and second converters 64 and 65 with a coolant (refrigerant).

The first radiator 48 is connected to a cooling flow path H1 through which a coolant is circulated by a pump 66, and the coolant is cooled by heat exchange with external air. The first radiator 48 includes a first fan 35 for promoting the heat exchange with external air.

The cooling target of the cooling flow path H1 of the first radiator 48 is, for example, electrical components (heat generating components) such as the step-up circuit 61, the inverter 62, the motor 31, and the first and second converters 64 and 65.

The second radiator 49 is connected to the cooling flow path H2 through which a coolant is circulated by a pump 67, and the coolant is cooled by the heat exchange with external air. The second radiator 49 includes a second fan 36 for promoting the heat exchange with external air.

The cooling target by the cooling flow path H2 of the second radiator 49 is, for example, an electrical component such as the fuel cell 24.

The auxiliary battery 63 is a power storage device that supplies electric power to a display, a communication device, and the like installed on the driver's seat 15. The auxiliary battery 63 is, for example, a charge-discharge type lead-acid battery. The output voltage of the auxiliary battery (second battery) 63 is, for example, 12 V, and is lower than the output voltage (for example, 24 V) of the battery unit (first battery) 30.

The auxiliary battery 63 can also be used as an auxiliary power source that supplies electric power to a control device 70 to be described later while the fuel cell 24 is suspended.

As illustrated in FIG. 9, the work vehicle 1 further includes the control device 70. The control device 70 can be configured by, for example, an electronic control unit (ECU) that communicates with various electrical components according to a communication protocol such as a controller area network (CAN). For example, the control device 70 includes the ECU that integrally controls the operation of the entire system from the filling of the tank 13 with hydrogen gas and the power generation by the fuel cell 24 to the power output, and the ECU related to individual control of the tank unit 21 and the like including the tank 13, the valves 74 to 78, and the sensors 81 and 82. Therefore, the control device 70 performs opening/closing control of the valves 76 to 78 included in the tank unit 21, acquisition of detection values of the pressure sensor 81 and the temperature sensor 82, processing of the acquired detection values, and the like.

### [Arrangement Example of Filling Port]

In the above-described embodiment (see FIG. 3 and FIG. 8), the two filling ports 26 (filling units 25) are disposed in the rear portion (rear surface) of the work vehicle 1. However, the present invention is not limited thereto. For example, the two filling ports 26 can be disposed on a side surface, an upper surface, and/or a front surface of the work vehicle 1. The two filling ports 26 can be disposed close to each other or can be disposed away from each other. The two filling ports 26 can be disposed not only on the common surface of the work vehicle 1 but also on mutually different surfaces.

Hereinafter, an arrangement example of the filling ports 26 will be described with reference to FIG. 2 to FIG. 6. In FIG. 2 to FIG. 6, an arrangement example of the filling ports 26 is denoted by a reference sign Q.

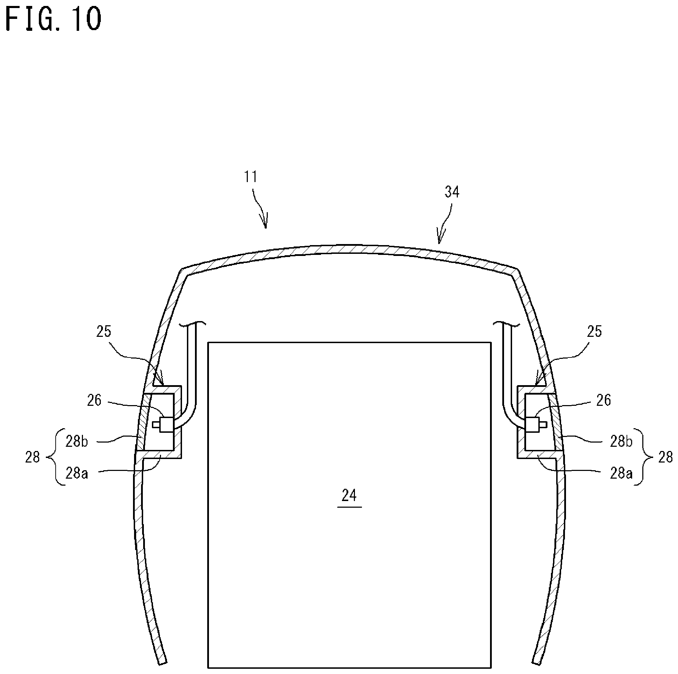

As illustrated in FIG. 4 and FIG. 5, the two filling ports 26 can be disposed on both side surfaces of the hood 34 indicated by a reference sign Q1 in the left-right direction. In this case, as illustrated in FIG. 10, the filling ports 26 may be disposed inside the hood 34. Specifically, a portion of the side surface of the hood 34 may be used as the lid 28b of the housing 28, the case 28a of the housing 28 may be disposed inside the lid 28b, and the filling port 26 may be disposed inside the housing 28. The filling port 26 is disposed so as to face outward in the left-right direction. The filling port 26 and the housing 28 can also be disposed outside the hood 34.

As illustrated in FIG. 4 and FIG. 5, the two filling ports 26 may be disposed on both side surfaces of the cover 111 indicated by a reference sign Q2 in the left-right direction. Alternatively, the filling ports 26 can be provided on both side surfaces of the fender 47 indicated by reference signs Q3 and Q4 in the left-right direction. The reference sign Q3 indicates an example in which the filling port 26 is disposed closer to a front portion of the fender 47, and the reference sign Q4 indicates an example in which the filling port 26 is disposed closer to a rear portion of the fender 47. In any case (Q2 to Q4), the filling ports 26 can be disposed inside or outside the cover 111 or the fender 47.

As illustrated in FIG. 4 and FIG. 5, the two filling ports 26 may be disposed on both left and right side surfaces of the cabin 16 indicated by reference signs Q5 and Q6. The reference sign Q5 indicates an example in which the filling port 26 is disposed closer to a front portion of the cabin 16, and the reference sign Q6 indicates an example in which the filling port 26 is disposed closer to a rear portion of the cabin 16. In any case, the filling port 26 can be disposed inside or outside the cabin 16.

As described above, by arranging the two filling ports 26 so as to be distributed to both left and right sides of the work vehicle 1 (vehicle body 11), for example, when the filling port 26 is brought close to the hydrogen gas supply machine 400 such as a gas station, it is possible to reduce movement such as a direction change of the work vehicle 1. Therefore, the labor required for the filling operation can be reduced, and the filling operation can be easily performed.

In FIG. 4 and FIG. 5, by selecting any two of Q1 to Q6, the two filling ports 26 can be disposed at the selected two positions. For example, one of the two filling ports 26 can be disposed at the hood (Q1) and the other at the fender 47(Q3 or Q4). In addition, both of the two filling ports 26 can be disposed on the left side surface or the right side surface of the work vehicle 1 (vehicle body 11). In this case, the two filling ports 26 can be disposed at positions separated from each other in the front-rear direction and/or positions separated from each other in the vertical direction. For example, one of the two filling ports 26 can be disposed on the left side surface of the hood 34 (Q1), and the other filling port can be disposed on the left side surface of the fender 47(Q3 or Q4). By disposing the two filling ports 26 on a common surface of the work vehicle 1, it is possible to easily perform an operation of simultaneously filling hydrogen gas from both of the two filling ports 26. In addition, in a case where the two filling ports 26 are disposed at positions separated in the front-rear direction, when the filling ports 26 are brought close to the hydrogen gas supply machine 400 such as a gas station, it is possible to reduce the movement of the work vehicle 1 in the front-rear direction. Therefore, the labor required for the filling operation can be reduced, and the filling operation can be easily performed.

As illustrated in FIG. 2, one or both of the two filling ports 26 can be disposed on a front surface of the work vehicle 1 (vehicle body 11). For example, the filling port 26 can be disposed on the front surface of the hood 34 indicated by a reference sign Q7. Also in this case, the filling port 26 can be disposed inside or outside the hood 34. In a case where the two filling ports 26 are disposed on the front surface of the work vehicle 1, the two filling ports 26 can be disposed at positions separated from each other in the vertical direction and/or at positions separated from each other in the left-right direction. In a case where one filling port 26 is disposed on the front surface of the work vehicle 1, the other filling port 26 can be disposed at another position (for example, a rear surface (see FIG. 8), left and right side surfaces Q1 to Q6 (see FIG. 4 and FIG. 5), and upper surfaces Q8 to Q10 (see FIG. 6)) of the work vehicle 1.

As illustrated in FIG. 6, one or both of the two filling ports 26 can be disposed on the upper surface of the work vehicle 1 (vehicle body 11). Specifically, the filling port 26 can be disposed on the upper surface of the hood 34 indicated by a reference sign Q8, the upper surface of the cover 111 indicated by a reference sign Q9, the upper surface of the fender 47 indicated by a reference sign Q10, and the like. In a case where the two filling ports 26 are disposed on the upper surface of the work vehicle 1, the two filling ports 26 can be disposed at positions separated from each other in the front-rear direction and/or at positions separated from each other in the left-right direction. In a case where one filling port 26 is disposed on the upper surface (Q9 or Q10) of the work vehicle 1, the other filling port 26 can be disposed at another position (for example, the front surface Q7 (see FIG. 2), the rear surface (see FIG. 8), the left and right side surfaces Q1 to Q6 (see FIG. 4 and FIG. 5)) of the work vehicle 1.

As illustrated in FIG. 3, one or both of the two filling ports 26 can be disposed on the rear surface of the fender 47 indicated by a reference sign Q10 and the rear surface of the cabin 16 indicated by a reference sign Q11. In a case where one filling port 26 is disposed on the rear surface (see Q10, Q11, and FIG. 3) of the work vehicle 1, the other filling port 26 can be disposed at another position (for example, a front surface (see FIG. 2), left and right side surfaces Q1 to Q6 (see FIG. 4 and FIG. 5), and upper surfaces Q8 to Q10 (see FIG. 6)) of the work vehicle 1.

In addition to the above, the filling port 26 can be disposed in the chassis 41 in the vehicle body 11 of the work vehicle 1. For example, one or both of the filling ports 26 can be disposed on the side surface of the front frame 32 in the left-right direction and the side surface of the transmission case 33 in the left-right direction. Alternatively, one or both of the filling ports 26 can be disposed on the lower surface of the chassis 41.

### [Modification of Pipe]

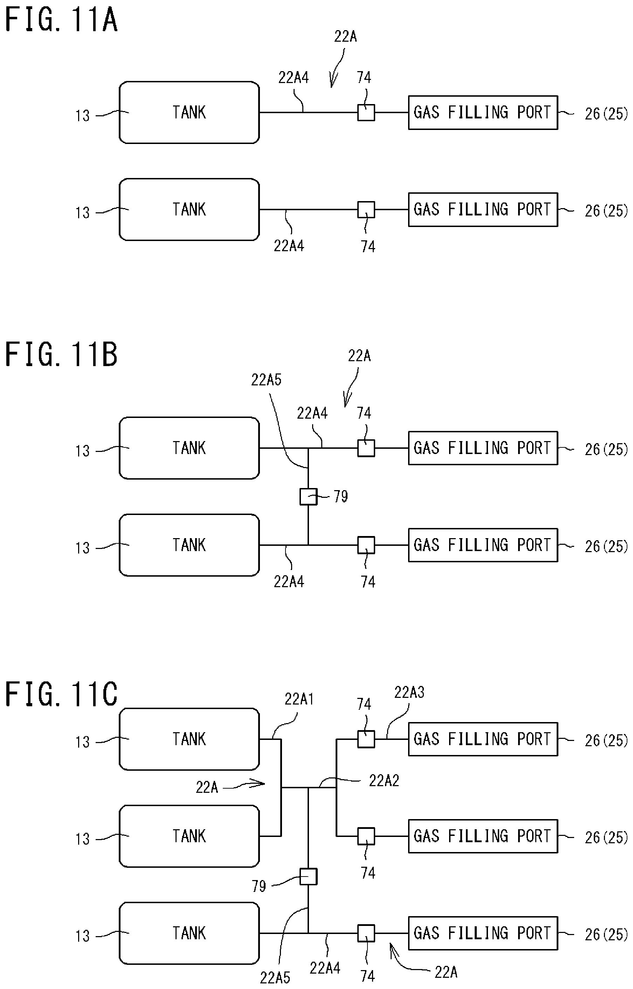

FIG. 11A to FIG. 11C are schematic views illustrating a modification of the connection form between the tank and the filling port. In other words, FIG. 11A to FIG. 11C illustrate a modification of the pipe 22A connecting the tank 13 and the plurality of filling ports 26.

The modification illustrated in FIG. 11A has two tanks 13 and two filling ports 26. One tank 13 and one filling port 26 are directly connected by a pipe 22A4, and the other tank 13 and the other filling port 26 are directly connected by another pipe 22A4. Each pipe 22A4 is provided with the check valve 74. Therefore, the hydrogen gas supplied from one filling port 26 is filled only in one tank 13, and the hydrogen gas supplied from the other filling port 26 is filled only in the other tank 13. In this modification, for example, the tank 13 can be filled with hydrogen gas in a short time by simultaneously supplying the hydrogen gas from both filling ports 26.

In the modification illustrated in FIG. 11B, similarly to the modification illustrated in FIG. 11A, two filling ports 26 and two tanks 13 are individually connected to each other by the respective pipes 22A4. Furthermore, two pipes 22A4 are connected to each other by a coupling pipe 22A5. The coupling pipe 22A5 is provided with an on-off valve 79. The on-off valve 79 is opened and closed to switch between a mode of allowing the flow of hydrogen gas in the coupling pipe 22A5 and a mode of blocking the flow. In this modification, by closing the on-off valve 79, similarly to the modification illustrated in FIG. 11A, only one tank 13 is filled with the hydrogen gas supplied from one filling port 26, and only the other tank 13 is filled with the hydrogen gas supplied from the other filling port 26. In addition, by opening the on-off valve 79, the two pipes 22A4 communicate with each other, and the hydrogen gas supplied from each filling port 26 is filled in both the tanks 13. Therefore, hydrogen gas can be filled in two modes by opening and closing the on-off valve 79.

In the modification illustrated in FIG. 11C, similarly to the embodiment illustrated in FIG. 9, two (two on upper side) tanks 13 and two (two on upper side) filling ports 26 are connected to each other by the pipe 22A having the downstream branch portion 22A1, the merging portion 22A2, and the upstream branch portion 22A3. Furthermore, one (one lowermost) tank and one (one lowermost) filling port 26 are connected to each other by the pipe 22A4. Similarly to the modification illustrated in FIG. 11B, the merging portion 22A2 and the pipe 22A4 are connected to each other by the coupling pipe 22A5 provided with the on-off valve 79. In this modification, by closing the on-off valve 79, the hydrogen gas filled from the two filling ports 26 on the upper side is filled in the two tanks 13 on the upper side, and the hydrogen gas supplied from one lowermost filling port 26 is filled only in one lowermost tank 13. In addition, by opening the on-off valve 79, the hydrogen gas supplied from the filling ports 26 is filled in the three tanks 13. Therefore, hydrogen gas can be filled in two modes by opening and closing the on-off valve 79.

### [Other Modifications]

The embodiment disclosed herein is illustrative in all respects and is not restrictive. The scope of rights of the present disclosure is not limited to the above-described embodiment, and includes all modifications within the scope equivalent to the configurations described in the claims.

In the above embodiment, the case where the work vehicle 1 includes two filling ports 26 has been mainly described, but three or more filling ports 26 may be provided. In this case, the two filling ports (the first filling port and the second filling port) 26 can be disposed at the positions illustrated in FIG. 2 to FIG. 6 and FIG. 8, and other filling ports 26 can be disposed at arbitrary positions. In addition, the number of tanks 13 is not limited.

### REFERENCE SIGNS LIST

- 1: work vehicle
- 11: vehicle body
- 13: tank
- 22A: pipe
- 22A2: merging portion
- 22A3: upstream branch portion
- 24: fuel cell
- 74: check valve
- 111: cover

## Claims

1. A work vehicle comprising:
a vehicle body;
a fuel cell installed on the vehicle body;
a tank configured to store fuel to be supplied to the fuel cell; and
a first filling port and a second filling port for filling the tank with fuel.

2. The work vehicle according to claim 1, wherein
the first filling port is disposed on one side surface of the vehicle body in a left-right direction, and
the second filling port is disposed on another side surface of the vehicle body in a left-right direction.

3. The work vehicle according to claim 1, wherein
the first filling port is disposed on one side surface of the vehicle body in a front-rear direction, and
the second filling port is disposed on another side surface of the vehicle body in a front-rear direction.

4. The work vehicle according to claim 1, wherein
the first filling port is disposed on one side surface of the vehicle body in a left-right direction, and
the second filling port is disposed on one side surface of the vehicle body in a front-rear direction.

5. The work vehicle according to claim 1, wherein the first filling port and the second filling port are disposed on a common surface of the vehicle body.

6. The work vehicle according to any one of claims 1 to 5, wherein
the vehicle body includes a cover configured to cover an installed device, and
at least one of the first filling port and the second filling port is disposed inside or outside the cover.

7. The work vehicle according to any one of claims 1 to 6, wherein
the tank includes a first tank and a second tank,
the work vehicle comprising a pipe configured to connect both the first filling port and the second filling port to the first tank and the second tank.

8. The work vehicle according to claim 7, wherein the pipe includes: a first branch portion having one end connected to the first filling port; a second branch portion having one end connected to the second filling port; and a merging portion configured to merge the other ends of the first branch portion and the second branch portion, and the first branch portion and the second branch portion are provided with a check valve configured to allow a flow of fuel in a direction toward the merging portion and block a flow of fuel in a reverse direction.

9. The work vehicle according to any one of claims 1 to 6, wherein
the tank includes a first tank and a second tank,
the work vehicle comprising first pipe configured to connect the first filling port to the first tank, and second pipe configured to connect the second filling port to the second tank.
